# EUROPÄISCHE PATENTSCHRIFT

(11) **EP 4 381 589 B1**
(45) Veröffentlichungstag und Bekanntmachung des Hinweises auf die Patenterteilung: **26.03.2025**
(21) Anmeldenummer: 23723963.7
(22) Anmeldetag: 09.05.2023
(51) Int. Cl.: H02K 15/00, H02K 15/06

(54) **VORRICHTUNG UND VERFAHREN ZUM AUSRICHTEN UND/ODER MASKIEREN VON STECKSPULEN**
DEVICE AND METHOD FOR ALIGINING AND/OR MASKING PLUG-IN COILS
DISPOSITIF ET PROCÉDÉ POUR ALIGNER ET/OU MASQUER DES BOBINES ENFICHABLES

(30) Priorität: 02.06.2022 DE 102022114042
(43) Veröffentlichungstag der Anmeldung: 12.06.2024
(73) Patentinhaber: Gehring Technologies GmbH + Co. KG, 73760 Ostfildern (DE)
(72) Erfinder: FREITAG, Martin, 72622 Nürtingen (DE)
(74) Vertreter: DREISS Patentanwälte PartG mbB
(86) Internationale Anmeldenummer: PCT/EP2023/062300
(87) Internationale Veröffentlichungsnummer: WO 2023/232406

(56) Entgegenhaltungen:
- EP-A1- 2 800 246
- JP-A- 2005 224 028
- JP-A- 2013 165 615
- JP-A- 2015 171 260
- JP-A- 2017 005 770
- JP-A- 2017 098 161

## Beschreibung

Die Erfindung betrifft eine Vorrichtung und ein Verfahren zum Ausrichten und Maskieren von zu verbindenden, insbesondere zu verschweißenden, freien Enden von Steckspulen eines Stators. Steckspulen sind typischerweise Hairpins und/oder I-Pins, wobei weitere Sonderformen möglich sind. Die Vorrichtung umfasst Merkmale des Oberbegriffs von Anspruch 1 und das Verfahren Merkmale des nebengeordneten Anspruchs.

Bei der Fertigung von elektromechanischen Wandlern, insbesondere Elektromotoren, insbesondere für Traktionsantriebe, werden einzelne Wicklungselemente (Steckspulen, bspw. sog. "Hairpins") hergestellt, die im weiteren Prozess zu einer Statorwicklung weiterverarbeitet werden.

Um bedingt durch höheren Füllungsgrad eine höhere Effizienz von Elektromaschinen zu erreichen, wurde von runden auf rechteckige Leiterquerschnitte übergegangen. Im Rahmen der Erfindung ist die Verwendung von Steckspulen mit beliebigen Leiterquerschnitten möglich, also bspw. runde oder rechteckige Querschnitte. Im Rahmen der Herstellung der Steckspulen werden aus Endlosmaterial entsprechende Leiterstücke abgetrennt und zu geeigneten Steckspulen umgeformt. Anschließend werden die Steckspulen nach einer Positionierung am Stator an Ihren oberen freien Enden miteinander verschweißt oder anderweitig verbunden, bspw. verlötet.

Um dieses Verschweißen bzw. Verbinden sicher und reproduzierbar zu gestalten, müssen miteinander zu verschweißende Hairpins in einer genau definierten Position zueinander positioniert und hierzu ausgerichtet werden, um deren gewünschten Kontakt miteinander sicherzustellen. Des Weiteren ist es gewünscht, den Bereich um die miteinander zu verschweißenden freien Enden der Steckspulen herum abzudecken bzw. zu maskieren, um zu verhindern, dass Schweißperlen oder beim Schweißvorgang entstehendes Abfallmaterial die übrigen Abschnitte der Hairpins kontaktiert und möglicherweise beschädigt.

Aufgabe der vorliegenden Erfindung ist es, Möglichkeiten bereitzustellen, Steckspulen-Anordnungen sicher, zuverlässig und reproduzierbar sowie effizient zu positionieren bzw. auszurichten und zu maskieren, um diese anschließend miteinander verschweißen bzw. verbinden zu können.

WO201211969 und WO2019/007459 beschreiben Vorrichtungen bei denen Steckspulen mittels zweier gegenläufig zueinander rotierter Maskierscheiben verspannt bzw. ausgerichtet und maskiert werden. Dabei wirken die beiden Scheiben in unterschiedlichen horizontalen Ebenen auf die Steckspulen ein und erzeugen damit Scherkräfte. Hierdurch kann das Ausrichten nur ungenügend erfolgen und die Steckspulen können beschädigt werden.

JP 2013 165615 A zeigt die Kontaktierung in unterschiedlichen horizontalen Ebenen, so dass Scherkräfte auftreten können. Weiter ist keine radiale Einspannung gezeigt.

Die erfindungsgemäße Vorrichtung und das Verfahren schließen diese Probleme aus.

Wie bereits erwähnt, so dienen das Ausrichten und Maskieren der Vorbereitung eines Verbindungsvorgangs, insbesondere Schweißvorgangs. Typischerweise werden dabei freie Enden der Steckspulen mittels Bestrahlung verschweißt. Typischerweise erfolgt dies mittels Laserbestrahlung. Die Bestrahlung wirkt dabei typischerweise stirnseitig auf die freien Enden ein. Die freien Enden werden von ihren Stirnseiten her lokal aufgeschmolzen und in gewünschten Konfigurationen untereinander verbunden.

Das Verbinden kann dabei paarweise erfolgen aber es können auch mehr als zwei Enden miteinander mit einer Schweißnaht verbunden werden, um die zugehörigen Steckspulen elektrisch leitend zu verbinden.

In einer Ausgangskonfiguration erstrecken die freien Enden sich entlang einer Längsrichtung. Mit den freien Enden sind die geradlinig ausgebildeten Endabschnitte der Steckspulen gemeint. Die freien Enden sind auf konzentrischen Kreisbahnen, die in einer Umfangsrichtung erstreckt sind, und in Reihen, die in radialer Richtung erstreckt sind, angeordnet. Dabei können einzelne "Stellen" in den Reihen und Kreisbahnen frei sein und einzelne Steckspulen bzw. deren freie Enden können an Sonderpositionen angeordnet sein. Der überwiegende Teil der freien enden befindet sich jedoch auf den erwähnten Reihen und Kreisbahnen.

Die Vorrichtung umfasst eine erste flächige Positioniereinheit und eine zweite flächige Positioniereinheit. Die Positioniereinheiten sind vorzugsweise scheibenartig ausgebildet. Jedenfalls sind sie flächig und damit in der Längsrichtung dünn ausgebildet und in radialer Richtung erstreckt ausgebildet. Eine im wesentlichen kreisförmige Außenkontur ist vorteilhaft, um eine einfache Drehbarkeit in der Vorrichtung zu realisieren, jedoch nicht zwingend nötig. Eine geringe Erstreckung in Längsrichtung erlaubt das Bearbeiten von kurzen freien Enden.

Die erste Positioniereinheit weist zur Position der freien Enden korrespondierend angeordnete erste Durchgänge für miteinander zu verschweißende Anordnungen von freien Enden auf und die zweite Positioniereinheit weist ebenfalls zur Position der freien Enden korrespondierend angeordnete zweite Durchgänge für miteinander zu verschweißende Anordnungen von freien Enden auf. Mit anderen Worten die Positioniereinheiten weisen Durchgänge auf, die korrespondierend zur Anordnung der freien Enden angeordnet sind. Dabei ist im Betrieb der Vorrichtung eine Anzahl von zu verschweißenden freien Enden jeweils in einem Durchgang angeordnet bzw. die freien Enden die in einem Durchgang angeordnet sind, werden miteinander verschweißt. Entsprechend können die Durchgänge unterschiedlich ausgebildet sein, je nachdem welche Steckspulen miteinander zu verbinden sind. Die Durchgänge können einzelne voneinander getrennte Öffnungen sein, sie können aber insbesondere auch miteinander verbundenen sein und ein einzelner Durchgang kann Teil einer Öffnung sein. Die einzelnen Durchgänge können durch Vorsprünge, die bspw. Anschläge bilden können, voneinander abgegrenzt sein.

Die erste Positioniereinheit und/oder die zweite Positioniereinheit sind rotierbar in der Vorrichtung angeordnet. Die Anordnung ist derart, dass die Positioniereinheiten bei einem Ausrichtvorgang der Steckspulen relativ zueinander, insbesondere beide in gegenläufiger Richtung zueinander, rotiert werden können. Es kann also eine Rotationsbewegung der beiden Positioniereinheiten relativ zueinander vorgesehen sein. Beide Positioniereinheiten können individuell beweglich in der Vorrichtung angeordnet sein. Es kann allerdings auch eine der Positioniereinheiten fest in der Vorrichtung angeordnet sein und nur die andere Positioniereinheit rotierbar in der Vorrichtung angeordnet sein.

Beim Rotieren der Positioniereinheiten kontaktiert die erste Positioniereinheit die Steckspulen in Umfangsrichtung mit einem ersten Kontaktabschnitt von einer ersten Seite und drängt sie in die gewünschte Position. Die zweite Positioniereinheit kontaktiert die Steckspulen in Umfangsrichtung mit einem zweiten Kontaktabschnitt von einer zweiten Seite und drängt sie in die gewünschte Position. Die Positioniereinheit sind zueinander um eine gemeinsame Achse rotierbar. Dabei kann eine oder beide der Positioniereinheiten in der Vorrichtung rotierbar sein.

Die zweite Seite liegt der ersten Seite gegenüber. Mit anderen Worten die Positioniereinheiten kontaktieren die freien Enden von gegenüberliegenden Seiten her.

Der erste Kontaktabschnitt und der zweite Kontaktabschnitt sind in einer zur Längsrichtung orthogonalen Kontaktebene angeordnet. Mit anderen Worten bezogen auf die Längsrichtung liegen sie auf gleicher Höhe. Bei einem Ausrichtvorgang kontaktieren sie die freien Enden daher auf gleicher Höhe entlang der Längsrichtung. Durch den beidseitigen Kontakt auf gleicher Höhe werden zum einen Scherkräfte vermieden und zum anderen erhöht sich die mögliche Genauigkeit der Positionierung.

Die erste Positioniereinheit und die zweite Positioniereinheit liegen typischer Weise aneinander an. Die Positioniereinheiten können also flächig aneinander anliegen. Die Erstreckung in Längsrichtung kann damit minimiert werden, was die Bearbeitung kurzer freier Enden begünstigt. Die Positioniereinheiten können aber auch derart ausgebildet und in der Vorrichtung angeordnet sein, dass die erste Positioniereinheit radial innenliegend von der zweiten Positioniereinheit angeordnet ist und die Positioniereinheiten sich im Bereich der Durchgänge in radialer Richtung ineinander erstrecken. Die Positioniereinheiten können also vollständig ein einer Ebene liegen.

Die ersten Durchgänge und die zweiten Durchgänge weisen jeweils radiale Anschlagsabschnitte für miteinander zu verschweißende Anordnungen von freien Enden auf. Die Anschlagsabschnitte können insbesondere radial innenliegend angeordnet sein. Die Vorrichtung umfasstweiter eine Radialspanneinrichtung mit mehreren Radialspanneinheiten, die jeweils ausgebildet und angeordnet sind, um die Anordnungen von freien Enden in übereinanderliegend angeordneten ersten Durchgängen und zweiten Durchgängen gegen die radialen Anschlagsabschnitte der ersten Durchgänge und/oder der zweiten Durchgänge zu drängen.

Die Kontaktabschnitte legen damit die Position einer Anordnung von zu verschweißenden freien Enden in Umfangsrichtung fest und die radiale Position wird mittels der radialen Anschlagsabschnitte und der Radialspanneinheiten vorgegeben.

Die Radialspanneinheiten können über einen gemeinsamen Antrieb, insbesondere einen Kulissenantrieb, gemeinsam in Radialrichtung bewegbar sein. Vorzugsweise sind die Radialspanneinheiten radial einwärts zum Verspannen bewegbar. Hierdurch können die radialen Anschlagsabschnitte radial innenliegend angeordnet sein und die Radialspanneinheiten können den radial außen vorhandenen größeren Bauraum nutzen.

Die Radialspanneinheiten können federnd gelagert sein, um eine maximale Anpresskraft in radialer Richtung bei ihrer Betätigung zu begrenzen. Die maximale auf die freien Enden aufgebrachte Kraft ist dabei auf die Kraft der federnden Lagerung begrenzt. Die federnde Lagerung kann bspw. gegenüber dem bereits erwähnten Kulissenantrieb gegeben sein. Der Kulissenantrieb wirkt auf die Federung und diese wiederum auf die jeweilige Radialspanneinheit. Wenn die Anpresskraft die Federkraft der Federung übersteigt, dann wird diese komprimiert und die Radialspanneinheiten bewegen sich trotz weiterer Betätigung des Kulissenantriebs nicht weiter.

Die Radialspanneinheiten können jeweils mehrere Spannelemente umfassen, wobei jedes der Spannelemente einzeln federnd gelagert ist. Je zu verschweißender Anordnungen bzw. je Durchgang kann ein federnd gelagertes Spannelement vorgesehen sein, so dass die zu verschweißenden Anordnungen jeweils individuell mit definierter Kraft verspannt werden können. Jede der Anschlagsflächen der Radialspanneinheiten ist damit individuell federnd gelagert.

Die ersten Durchgänge und/oder die zweiten Durchgänge können an einer Einführseite Einführphasen aufweisen, was das Einführen der Enden in die Durchgänge erleichtert.

Die erste Positioniereinheit und/oder die zweite Positioniereinheit und/oder ein Kulissenantriebselement, das der Betätigung der Radialspanneinheiten dient, können über einen jeweiligen Linearantrieb in Rotation in Umfangsrichtung bringbar sein. Ein Linearantrieb ist eine zuverlässige und robuste Möglichkeit um die Rotationsbewegung umzusetzen.

Die Vorrichtung kann auf einer Schweißseite eine Abdeckeinheit umfassen. Die Abdeckeinheit kann mit Öffnungen für die freien Enden ausgebildet sein.

Die Radialspanneinheit kann auf Seiten der Schweißseite von den Positioniereinheit angeordnet sein. Insbesondere kann auf der Schweißseite zunächst die Abdeckeinheit angeordnet sein und dann die Radialspanneinheit und dann die beiden Positioniereinheiten. Die Radialspanneinheit kann jedoch auch auf der gegenüberliegenden Seite angeordnet sein. Die Positioniereinheiten sind dann zwischen Abdeckeinheit und Radialspanneinheit.

Die Abdeckeinheit verhindert, dass beim Schweißen ungewünschtes Material in die Vorrichtung gelangt und bspw. bewegliche Teile beschädigt.

Teil der Vorrichtung kann auch eine Schweißeinheit sein, die ausgebildet und angeordnet ist, um die freien Enden, die in den Durchgängen angeordnet sind, zu verschweißen. Typischerweise ist die Schweißeinheit eine Strahlschweißeinheit, insbesondere eine Laser-Schweißeinheit.

Teil der Erfindung ist wie bereits erläutert auch ein Verfahren zum Ausrichten und Maskieren von zu verschweißenden freien Enden von Steckspulen eines Stators, wobei das Ausrichten und Maskieren der Vorbereitung eines Schweißvorgangs dient, durch welchen die freien Enden der Steckspulen untereinander verbunden werden. Die freien enden befinden sich dabei ein der bereits eingangs erläuterten Konfiguration mit radial erstreckten Reihen und umfänglich verlaufenden Kreisbahnen.

Die Positioniereinheiten 20, 22 können derart ausgebildet und angeordnet sein, dass sie ineinandergreifen. Ein Abschnitt einer der Positioniereinheiten kann in einer entsprechenden Ausnehmung der anderen Positioniereinheit 22 verschieblich angeordnet sein. Insbesondere können mehrere Abschnitte und Ausnehmungen and den Positioniereinheiten vorhanden sein, die sich jeweils ineinander erstrecken. Die Positioniereinheiten können derart ineinandergreifend ausgebildet sin, dass sie im Wesentlichen eine gemeinsame Kreisringscheibe bilden (andere geometrische radiale Außen- und Innenkonturformen sind ebenso möglich; eine überwiegende Kreisform ist jedoch durch die Rotationssymmetrie vorteilhaft).

Bei dem Verfahren werden eine erste flächige Positioniereinheit und eine zweite flächige Positioniereinheit verwendet. Diese können die bereits erwähnten Positioniereinheiten der Vorrichtung sein. Insbesondere kann das Verfahren mittels einer wie hier beschrieben ausgebildeten Vorrichtung durchgeführt werden.

Die erste Positioniereinheit weist zur Position der freien Enden korrespondierend angeordnete erste Durchgänge für miteinander zu verschweißende Anordnungen von freien Enden auf und die zweite Positioniereinheit weist ebenfalls zur Position der freien Enden korrespondierend angeordnete zweite Durchgänge für miteinander zu verschweißende Anordnungen von freien Enden auf.

Die jeweiligen Durchgänge können in einer radial gerichteten Reihe miteinander verbunden ausgeführt sein, sie sind in einem solchen Fall jeweils durch Vorsprünge voneinander "getrennt" bzw. zueinander abgegrenzt ausgebildet. Die Durchgänge können jedoch auch voneinander durch durchgehende Materialstege getrennt sein.

Die freien Enden werden in den ersten Durchgängen und den zweiten Durchgängen angeordnet. Hierzu können die Positioniereinheiten bspw. auf den Stator abgesenkt werden oder auch der Stator von unten in die Durchgänge eingeführt werden. Die Bezeichnungen unten und oben sind dabei nicht zwingend als auf die Schwerkraftrichtung bezogen zu verstehen, sondern auf eine Unter- und Oberseite der Positioniereinheiten. Mit anderen Worten, das " auf den Stator Absenken" kann auch ein "Anheben" gegen die Schwerkraft sein.

Anschließend werden die erste Positioniereinheit und die zweite Positioniereinheit in einem Ausrichtvorgang der Steckspulen in gegenläufiger Richtung zueinander rotiert.

Die erste Positioniereinheit und die zweite Positioniereinheit kontaktieren die Steckspulen an gegenüberliegenden Seiten in einer zur Längsrichtung orthogonalen Kontaktebene, so dass die erste Positioniereinheit und die zweite Positioniereinheit die freien Enden auf gleicher Höhe entlang der Längsrichtung kontaktieren.

Bei dem Verfahren werden die freien Enden in einem radialen Ausrichtschritt in radialer Richtung gegen die jeweiligen radialen Anschlagsabschnitte der ersten Positioniereinheit und/oder der zweiten Positioniereinheit gedrängt.

Teil des Verfahrens kann auch sein, dass freie Enden miteinander zu verschweißender Anordnungen mittels eines Strahlschweißschritts miteinander verschweißt werden, während die freien Enden sich in den Durchgängen der Positioniereinheit und der zweiten Positioniereinheit befinden.

Die Erfindung wird im Folgenden anhand der Figuren näher beschrieben, wobei gleiche oder funktional gleiche Elemente ggf. lediglich einmal mit Bezugszeichen versehen sind.

Es zeigen:
Figur 1 eine erfindungsgemäße Vorrichtung in perspektivischer Ansicht;
Figur 2 die Vorrichtung aus Figur 1 in einer anderen perspektivischen Ansicht;
Figur 3 eine Ansicht auf einen Teil der Positioniereinheiten in geöffnetem Zustand von unten gesehen;
Figur 4 eine Ansicht auf einen Teil der Positioniereinheiten in geschlossenem Zustand von schräg unten gesehen;
Figur 5 eine Detailansicht eines Teils der Positioniereinheiten;

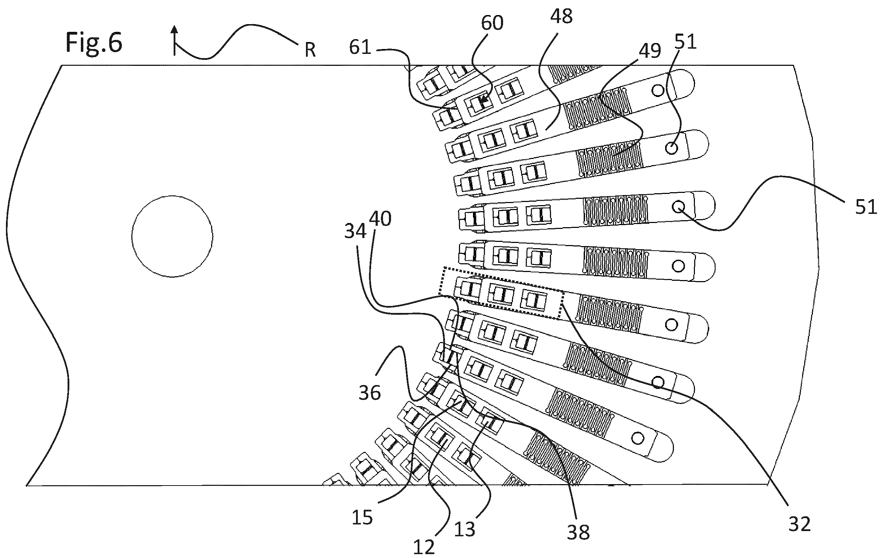

Figur 6 einen Teil einer Radialspanneinrichtung mit mehreren Radialspanneinheiten; und
Figur 7 eine schematische Darstellung einer Radialspanneinheit mit mehreren Radialspannelementen.

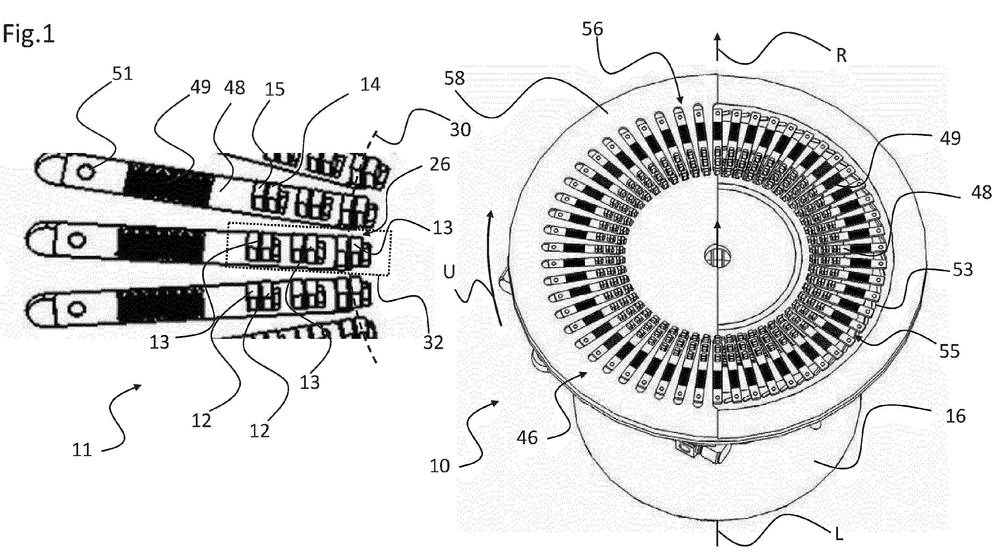

Figur 1 zeigt eine Vorrichtung 10 zum Ausrichten und Maskieren von zu verschweißenden freien Enden 12 von Steckspulen 14 eines Stators 16, der nur angedeutet dargestellt ist.

Die Steckspulen 14 bzw. deren freie Enden sind dabei jeweils paarweise, also in Paaren 13 angeordnet. Die Paare 13 stellen vorliegend zu verschweißende Anordnungen 26 von freien Enden 12 dar. Die Anordnungen 26 umfassen typischerweise Pin-Paare, es können aber auch bspw. 3 oder mehr Pins in einer jeweiligen Anordnung 26 sein.

Die freien Enden 12 erstrecken sich vom Stator her entlang einer Längsrichtung L und enden in deren Stirnseiten 15, die typischerweise orthogonal zur Längsrichtung L erstreckt ist.

Im linken Teil von Figur 1 ist ein Teilbereich 11 der Vorrichtung 10 vergrößert dargestellt und die Konfiguration der freien Enden 12 gut erkennbar.

Die freien Enden 12 sind auf konzentrischen Kreisbahnen 30 (dargestellt durch eine unterbrochene Linie), die in einer Umfangsrichtung U erstreckt sind, und in Reihen 32 (dargestellt durch ein punktiertes Rechteck), die in radialer Richtung R erstreckt sind, angeordnet.

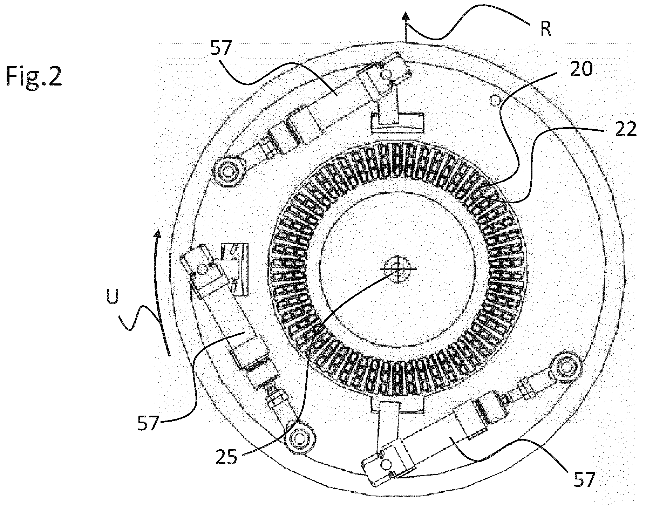

Figur 2 zeigt die Vorrichtung beim Blick entlang der Längsrichtung L von der Seite des Stators 16 her, wobei der Stator 16 und die Steckspulen 14 nicht gezeigt sind.

Die Vorrichtung 10 weist eine erste flächige Positioniereinheit 20 und eine zweite flächige Positioniereinheit 22 auf. Die beiden Positioniereinheiten 20, 22 sind um eine gemeinsame Drehachse 25 gegeneinander rotierbar. (hierzu kann eine, vorzugsweise aber beide der Positioniereinheiten 20, 22 drehbar in der Vorrichtung 10 angeordnet sein.)

Die erste Positioniereinheit 20 weist erste Durchgänge 24 auf. Die ersten Durchgänge 24 sind zur Position der freien Enden 12 korrespondierend angeordnet und dienen der Aufnahme von miteinander zu verschweißende Anordnungen 26, in diesem Fall also der Paare 13, von freien Enden 12.

Die zweite Positioniereinheit 22 weist ebenfalls zur Position der freien Enden 12 korrespondierend angeordnete zweite Durchgänge 28 für miteinander zu verschweißende Anordnungen 26 von freien Enden 12 auf.

Die ersten Durchgänge 24 und die zweiten Durchgänge 28 sind damit in der Vorrichtung 10 weitestgehend deckungsgleich angeordnet. Die Durchgänge 24, 28 können einzelne voneinander getrennte "Öffnungen" sein, sie können aber, wie in den Figuren gezeigt, insbesondere auch miteinander verbundenen sein und ein einzelner Durchgang 24, 28 kann Teil einer "Öffnung" also eines Materialdurchbruchs sein. Die einzelnen Durchgänge 24, 28 können wie in den Figuren gezeigt durch Vorsprünge (bspw. die wie vorliegend in Umfangsrichtung abragend ausgebildet sind), die bspw. Anschläge bilden können, voneinander abgegrenzt sein.

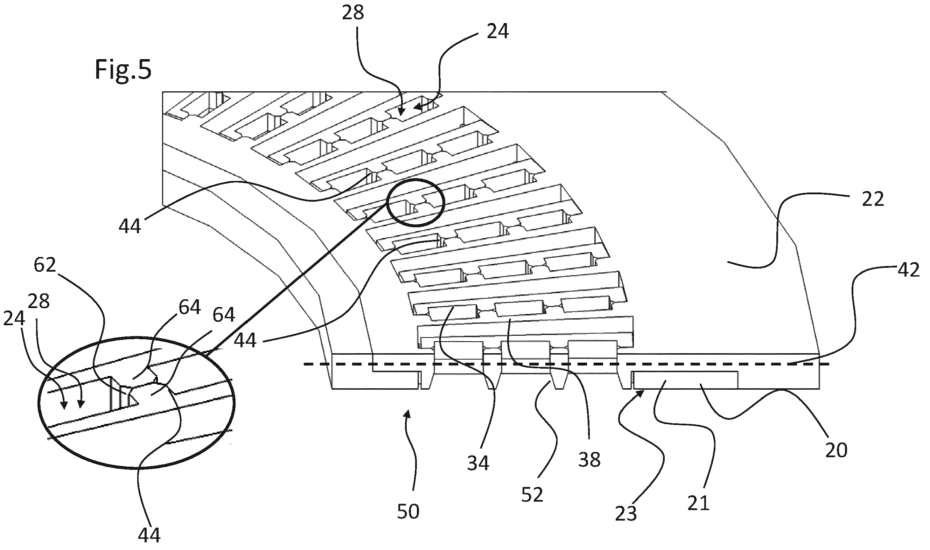

Die erste flächige Positioniereinheit 20 weist je zu kontaktierendem Paar 13 an freien Enden 12 einen ersten Kontaktabschnitt 34 auf und die zweite flächige Positioniereinheit 22 weist je zu kontaktierendem Paar 13 an freien Enden 12 einen zweiten Kontaktabschnitt 38 auf (siehe Figur 5).

Die erste Positioniereinheit 20 und die zweite Positioniereinheit 22 sind derart rotierbar in der Vorrichtung 10 angeordnet, dass die Positioniereinheiten 20, 22 bei einem Ausrichtvorgang der Steckspulen 14 in gegenläufiger Richtung rotiert werden können. Die Rotation erfolgt um die gemeinsame Drehachse 25.

Durch die Rotation werden die freien Enden 12 der Steckspulen 14 ausgerichtet und maskiert. Durch die Rotation werden die ersten Durchgänge 24 und die zweiten Durchgänge 28 gegenüber einander verschoben, so dass deren Seiten (erste Kontaktabschnitte 34 und zweite Kontaktabschnitte 38) die freien Enden von gegenüberliegenden Seiten kontaktieren und in die gewünschte Position drängen. Das Ausrichten und Maskieren dient der Vorbereitung eines Schweißvorgangs, durch welchen die Paare 13 bzw. Anordnungen 26 der freien Enden 12 der Steckspulen 14 untereinander verbunden werden. Dies geschieht durch Strahlschweißen. Eine entsprechende Strahlschweißeinrichtung kann Teil der Vorrichtung 10 sein.

Beim Ausrichten werden also die Positioniereinheiten 20, 22 gegenläufig zueinander rotiert. Die erste Positioniereinheit 20 kontaktiert die Steckspulen 14 in Umfangsrichtung U mit dem ersten Kontaktabschnitt 34 von einer ersten Seite und drängt diese in die gewünschte Position. Die zweite Positioniereinheit 22 kontaktiert die Steckspulen 14 in Umfangsrichtung U mit dem zweiten Kontaktabschnitt 38 von einer zweiten Seite und drängt diese in die gewünschte Position. Das Drängen in die gewünschte Position führt dabei typischerweise nur zu geringen Positionsänderungen, sofern die Steckspulen bereits überwiegend korrekt ausgerichtet sind. Das Drängen in die gewünschte Position dient einem Sicherstellen der korrekten Ausrichtung und einem Sicherstellen einer guten Anlage der miteinander zu verschweißenden Steckspulen 14 aneinander, so dass sich eine hochwertige Schweißnaht ausbilden kann. Die Positioniereinheiten 20, 22 liegen in Umfangrichtung U seitlich an den Steckspulen 14 an und sorgen so für eine Maskierung.

Der Kontakt durch den ersten Kontaktabschnitt 34 und den zweiten Kontaktabschnitt 38 erfolgt also von unterschiedlichen Seiten, die sich gegenüberliegen. Der erste Kontaktabschnitt 34 und der zweite Kontaktabschnitt 38 liegen dabei in einer zur Längsrichtung L orthogonalen Kontaktebene 42. Dadurch kontaktieren sie bei einem Ausrichtvorgang die freien Enden 12 auf gleicher Höhe entlang der Längsrichtung L. Dies vermeidet Biegemomente und Scherkräfte auf die freien Enden 12. Die Kontaktebene 42 ist in Fig. 5 durch eine unterbrochene Linie dargestellt.

Die erste Positioniereinheit 20 und die zweite Positioniereinheit 22 liegen vorliegend aneinander an.

In der gezeigten Ausführungsform greifen die Positioniereinheiten 20, 22 ineinander. Ein Abschnitt 21 der ersten Positioniereinheit 20 ist in einer entsprechenden Ausnehmung 23 der zweiten Positioniereinheit 22 verschieblich angeordnet. Die Positioniereinheiten 20, 22 sind vorliegend derart ineinandergreifend ausgebildet, dass sie im Wesentlichen eine gemeinsame Kreisringscheibe bilden (andere geometrische radiale Außen- und Innenkonturformen sind ebenso möglich; eine überwiegende Kreisform ist jedoch durch die Rotationssymmetrie vorteilhaft).

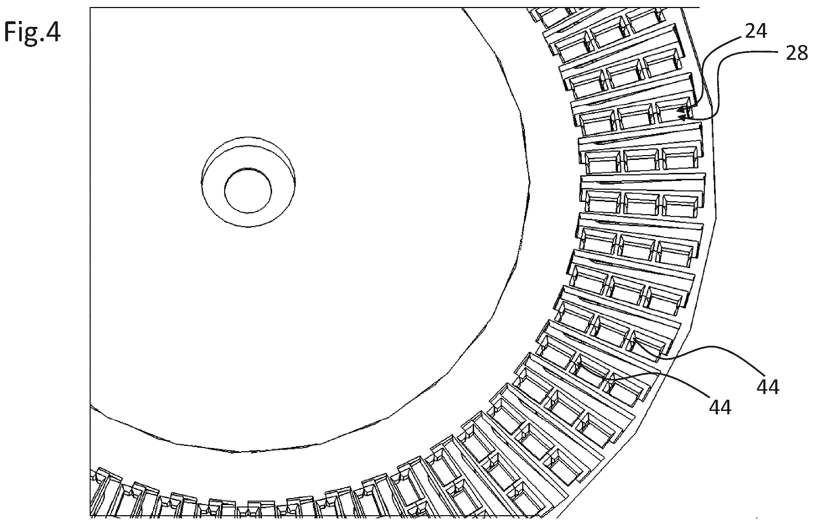

Die ersten Durchgänge 24 und/oder die zweiten Durchgänge 28 weisen jeweils radiale Anschlagsabschnitte 44 für die miteinander zu verschweißende Anordnungen 26 von freien Enden 12 auf (siehe Figur 4 und 5).

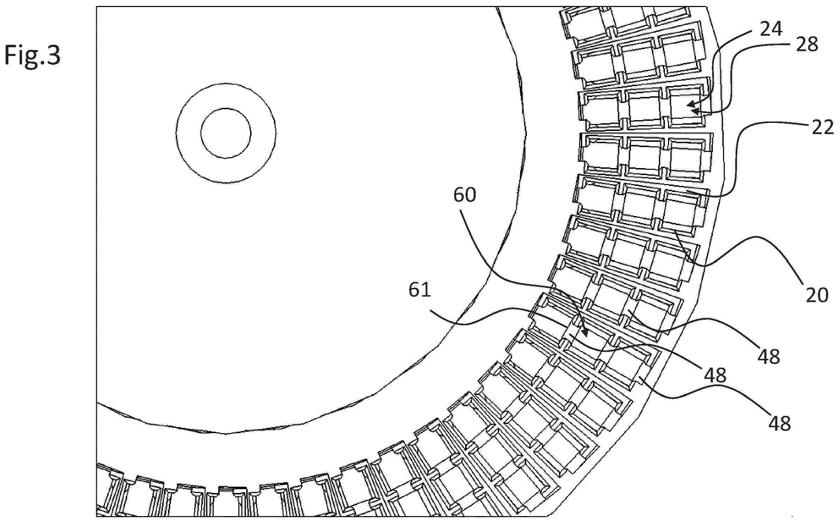

Die Vorrichtung weist weiter eine Radialspanneinrichtung 46 mit mehreren Radialspanneinheiten 48 auf. Die Radialspanneinheiten 48 sind jeweils ausgebildet und angeordnet, um die in übereinanderliegend angeordneten ersten Durchgängen 24 und zweiten Durchgängen 28 befindlichen zu verschweißenden Anordnungen 26 von freien Enden 12 gegen die radialen Anschlagsabschnitte 44 der ersten Durchgänge 24 und der zweiten Durchgänge 28 zu drängen. Hierzu weisen die Radialspanneinheiten 48 für die radial außenliegenden Anordnungen 26 von freien Enden 12 jeweils Ausnehmungen 60 auf und eine Anschlagsfläche 61 für die radial innenliegende Anordnungen 26 von freien Enden 12. In Figur 3 sind die Positioniereinheiten 20, 22 geöffnet und ein Teil der Radialspanneinheiten 48 ist sichtbar. In Figur 4 sind die Positioniereinheiten 20, 22 geschlossen und die Radialspanneinheiten 48, die oberhalb der Positioniereinheiten 20, 22 angeordnet sind, sind nicht sichtbar.

Die Radialspanneinheiten 48 sind über einen Kulissenantrieb mit einem Kulissenantriebselement 54 gemeinsam in Radialrichtung R bewegbar. Das Kulissenantriebselement 54 des Kulissenantriebs 53 ist vorliegend als scheibenförmiges Element mit Bahnkurven 55 ausgebildet. Je Radialspanneinheiten 48 ist eine Bahnkurve 55 vorgesehen.

Die Radialspanneinheiten 48 sind weiter mittels einer federnden Lagerung 49 federnd gelagert, um eine maximale Anpresskraft in radialer Richtung R bei ihrer Betätigung auf die Kraft der federnden Lagerung 49 zu begrenzen. Die Radialspanneinheiten 48 sind über die federnde Lagerung 49 mit Eingriffselementen 51 verbunden, welche wiederum in die Bahnkurven 55 des Kulissenantriebselements 54 eingreifen. Wird das Kulissenantriebselement 54 rotiert, so bewegen sich die Eingriffselemente 51 entlang der Bahnkurven 55 und drängen die Radialspanneinheiten 48 über die federnden Lagerungen 49 nach radial innen. Kommen die freien Enden 12 radial innenliegend mit den radialen Anschlagsabschnitten 44 in Kontakt, so wird die federnde Lagerungen 49 komprimiert, wenn das Kulissenantriebselement 54 weiter bewegt wird. Eine weitere Bewegung der freien Enden 12 findet nicht statt, sondern sie werden mit der Spannung der federnden Lagerungen 49 gegen den jeweiligen radialen Anschlagsabschnitt 44 gepresst. Damit sind die freien Enden in ihrer vorgesehenen Position für das Verschweißen und sind sowohl in Umfangsrichtung U und in Radialrichtung R maskiert.

Die ersten Durchgänge 24 und die zweiten Durchgänge 28 weisen an einer Einführseite 50 Einführphasen 52 auf (siehe Figur 5). hierdurch wird das Einführen der freien Enden 12 erleichtert und es werden Beschädigungen vermieden.

Endabschnitte 62 von Begrenzungen 64 der Durchgänge 24, 28 (die Begrenzungen 64 der ersten Positioniereinheit 20 und der zweiten Positioniereinheit 22 bilden gemeinsam die radialen Anschlagsabschnitte 44) können abgerundet oder angefast sein, so dass die lichte Weite der Durchgänge in radialer Richtung im Bereich dieser Endabschnitte erhöht ist. Hierdurch kann im geöffneten Zustand der Positioniereinheiten 20, 22 auch eine zu verschweißende Anordnungen 26 entnommen werden, die eine größere Schweißperle als vorgesehen oder eine asymmetrisch platzierte Schweißperle aufweist.

Die erste Positioniereinheit 20, die zweite Positioniereinheit 22 und das Kulissenantriebselement 54, das der Betätigung der Radialspanneinheiten 48 dient, sind über einen jeweiligen Linearantrieb 57 in Rotation im Umfangsrichtung U um die gemeinsame Drehachse 25 bringbar.

Die Vorrichtung 10 weist auf einer Schweißseite 56 eine Abdeckeinheit 58 auf, mit schlitzartigen Öffnungen für die freien Enden 12.

Die Radialspanneinheiten 48 sind auf Seiten der Schweißseite 56 von den Positioniereinheiten 20, 22 angeordnet, also in Längsrichtung zwischen den Positioniereinheiten 20, 22 und der Abdeckeinheit 58.

Teil der Erfindung ist auch ein Verfahren zum Ausrichten und Maskieren der zu verschweißenden freien Enden 12 der Steckspulen 14 des Stators 16. Das Ausrichten und Maskieren dient dabei der Vorbereitung des Schweißvorgangs, durch welchen die freien Enden 12 der Steckspulen 14 untereinander verbunden werden.

Hierzu können die bereits beschriebenen Positioniereinheiten 20, 22 verwendet werden. Die freien Enden 12 der Steckspulen 14 werden in den Durchgängen 24, 28 der Positioniereinheiten 20, 22 angeordnet, wenn sich diese in einer "geöffneten" Stellung befinden, wie in Figur 3 gezeigt.

Anschließend werden die erste Positioniereinheit 20 und die zweite Positioniereinheit 22 in einem Ausrichtvorgang der Steckspulen 14 in gegenläufiger Richtung zueinander rotiert. Die ersten Kontaktabschnitte 34 und die zweiten Kontaktabschnitte 38 bewegen sich in gegenläufiger umfänglicher Richtung aufeinander zu und verkleinern die freie Fläche der Durchgänge 24, 28 (siehe Figur 4).

Die Steckspulen 14 werden an gegenüberliegenden Seiten in der Kontaktebene 42 auf gleicher Höhe entlang der Längsrichtung L kontaktiert. Zeitgleich, nachfolgend oder vorab werden die freien Enden 12 in radialer Richtung R gegen jeweils radiale Anschlagsabschnitte 44 der ersten Positioniereinheit 20 und/oder der zweiten Positioniereinheit 22 mittels der Radialspanneinheiten 48 gedrängt.

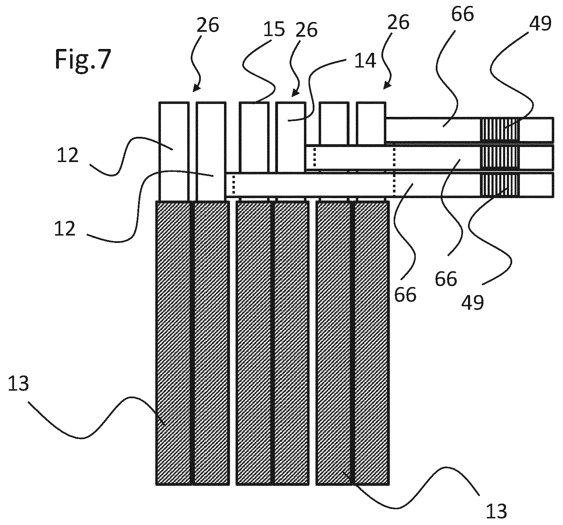

Die Radialspanneinheiten 48 können jeweils mehrere Spannelemente 66 umfassen, dabei kann jedes der Spannelemente 66 einzeln federnd gelagert sein. Eine derartige Ausführung ist schematisch in Figur 7 gezeigt. Je zu verschweißender Anordnungen 26 bzw. je Durchgang 24 kann in dieser Ausführung ein federnd gelagertes Spannelement 66 vorgesehen sein, so dass die zu verschweißenden Anordnungen 26 jeweils individuell mit definierter Kraft verspannt werden können. Jedes der Spannelemente 66 weist also seine eigene federnde Lagerung 49 auf. Die einzelnen Anordnungen könne so individuell genau positioniert und verspannt werden. Fertigungstoleranzen der Steckspulen 14 können so individuell ausgeglichen werden.

## Patentansprüche

1. Vorrichtung (10) zum Ausrichten und Maskieren von zu verschweißenden freien Enden (12) von Steckspulen (14) eines Stators (16), wobei das Ausrichten und Maskieren der Vorbereitung eines Verbindungsvorgangs, insbesondere Schweißvorgangs, dient, durch welchen freie Enden (12) der Steckspulen (14) untereinander verbunden werden, wobei die freien Enden (12) sich entlang einer Längsrichtung (L) erstrecken, und wobei die freien Enden (12) auf konzentrischen Kreisbahnen (30), die in einer Umfangsrichtung (U) erstreckt sind, und in Reihen (32), die in radialer Richtung (R) erstreckt sind, angeordnet sind, wobei die Vorrichtung (10) eine erste flächige Positioniereinheit (20) und eine zweite flächige Positioniereinheit (22) umfasst, wobei die erste Positioniereinheit (20) zur Position der freien Enden (12) korrespondierend angeordnete erste Durchgänge (24) für miteinander zu verschweißende Anordnungen (26) von freien Enden (12) aufweist und die zweite Positioniereinheit (22) ebenfalls zur Position der freien Enden (12) korrespondierend angeordnete zweite Durchgänge (28) für miteinander zu verschweißende Anordnungen (26) von freien Enden (12) aufweist, wobei die erste Positioniereinheit (20) und/oder die zweite Positioniereinheit (22) rotierbar in der Vorrichtung (10) angeordnet sind, so dass die Positioniereinheiten (20, 22) bei einem Ausrichtvorgang der Steckspulen (14) relativ zueinander, insbesondere in zueinander gegenläufiger Richtung, rotiert werden können, so dass die erste Positioniereinheit (20) die Steckspulen (14) in Umfangsrichtung (U) mit einem ersten Kontaktabschnitt (34) von einer ersten Seite (36) kontaktiert und in die gewünschte Position drängt und die zweite Positioniereinheit (22) die Steckspulen (14) in Umfangsrichtung (U) mit einem zweiten Kontaktabschnitt (38) von einer zweiten Seite (40) kontaktiert und in die gewünschte Position drängt, wobei die zweite Seite (40) der ersten Seite (36) gegenüberliegt, wobei der erste Kontaktabschnitt (34) und der zweite Kontaktabschnitt (38) in einer zur Längsrichtung (L) orthogonalen Kontaktebene (42) liegen, so dass sie bei einem Ausrichtvorgang die freien Enden (12) auf gleicher Höhe entlang der Längsrichtung (L) kontaktieren, wobei die ersten Durchgänge (24) und/oder die zweiten Durchgänge (28) radiale Anschlagsabschnitte (44) für miteinander zu verschweißende Anordnungen (26) von freien Enden (12), **dadurch gekennzeichnet, dass** die Vorrichtung weiter eine Radialspanneinrichtung (46) mit mehreren Radialspanneinheiten (48) umfasst, die jeweils ausgebildet und angeordnet sind, um die in übereinanderliegend angeordneten ersten Durchgängen (24) und zweiten Durchgängen (28) befindlichen zu verschweißenden Anordnungen (26) von freien Enden (12) gegen die radialen Anschlagsabschnitte (44) der ersten Durchgänge (24) und/oder der zweiten Durchgänge (28) zu drängen.

2. Vorrichtung nach Anspruch 1, **dadurch gekennzeichnet, dass** die erste Positioniereinheit (20) und die zweite Positioniereinheit (22) in Längsrichtung aneinander anliegen, insbesondere ineinandergreifende Abschnitte aufweisen, insbesondere eine der Positioniereinheiten (20, 22) einen Abschnitt aufweist, der in einer Ausnehmung der anderen Positioniereinheit (20, 22), insbesondere geführt, verschieblich angeordnet ist.

3. Vorrichtung nach Anspruch 1, **dadurch gekennzeichnet, dass** die erste Positioniereinheit (20) radial innenliegend von der zweiten Positioniereinheit (22) angeordnet ist und die Positioniereinheiten (20, 22) sich im Bereich der Durchgänge (24, 28) in radialer Richtung ineinander erstrecken.

4. Vorrichtung nach einem der vorigen Ansprüche, **dadurch gekennzeichnet, dass** die Radialspanneinheiten (48) über einen gemeinsamen Antrieb, insbesondere einen Kulissenantrieb, gemeinsam in Radialrichtung (R) bewegbar sind.

5. Vorrichtung nach einem der vorigen Ansprüche, **dadurch gekennzeichnet, dass** die Radialspanneinheiten (48) federnd gelagert sind, um eine maximale Anpresskraft in radialer Richtung (R) bei ihrer Betätigung auf die Kraft der federnden Lagerung (49) zu begrenzen, insbesondere wobei die Radialspanneinheiten (48) jeweils mehrere Spannelemente (66) umfassen, wobei jedes der Spannelemente (66) einzeln federnd gelagert ist, insbesondere wobei je zu verschweißender Anordnungen (26) bzw. je Durchgang (24) ein federnd gelagertes Spannelement (66) vorgesehen ist.

6. Vorrichtung nach einem der vorigen Ansprüche, **dadurch gekennzeichnet, dass** die ersten Durchgänge (24) und/oder die zweiten Durchgänge (28) an einer Einführseite (50) Einführphasen (52) aufweisen.

7. Vorrichtung nach einem der vorigen Ansprüche, **dadurch gekennzeichnet, dass** die erste Positioniereinheit (20) und/oder die zweite Positioniereinheit (22) und/oder ein Kulissenantriebselement (54), das der Betätigung der Radialspanneinheiten (48) dient, über einen jeweiligen Antrieb, insbesondere einen Linearantrieb (57), in Rotation im Umfangsrichtung (U) bringbar sind oder wobei die erste Positioniereinheit (20) und die zweite Positioniereinheit (22) über einen gemeinsamen Antrieb in gegenläufige Richtungen bewegbar sind.

8. Vorrichtung nach einem der vorigen Ansprüche, **dadurch gekennzeichnet, dass** die Vorrichtung (10) auf einer Schweißseite (56) eine Abdeckeinheit (58) umfasst, mit Öffnungen für die freien Enden (12).

9. Vorrichtung nach einem der vorigen Ansprüche, **dadurch gekennzeichnet, dass** die Radialspanneinheiten (48) auf Seiten der Schweißseite (56) von den Positioniereinheiten (20, 22) angeordnet ist.

10. Vorrichtung nach einem der vorigen Ansprüche, **dadurch gekennzeichnet, dass** die Positioniereinheiten (20, 22) Begrenzungen (64) der Durchgänge (24, 28) aufweisen, wobei deren Endabschnitte (62) abgerundet sind, so dass im geöffneten Zustand der Positioniereinheiten (20, 22) die lichte Weite der Durchgänge (24, 28) in radialer Richtung höher ist als im geschlossenen Zustand.

11. Verfahren zum Ausrichten und Maskieren von zu verschweißenden freien Enden (12) von Steckspulen (14) eines Stators (16), wobei das Ausrichten und Maskieren der Vorbereitung eines Schweißvorgangs dient, durch welchen die freien Enden (12) der Steckspulen (14) untereinander verbunden werden, wobei die freien Enden (12) sich entlang einer Längsrichtung (L) erstrecken, und wobei die freien Enden (12) auf konzentrischen Kreisbahnen (30), die in einer Umfangsrichtung (U) erstreckt sind, und in Reihen (32), die in radialer Richtung (R) erstreckt sind, angeordnet sind, wobei eine erste flächige Positioniereinheit (20) und eine zweite flächige Positioniereinheit (22) verwendet werden, wobei die erste Positioniereinheit (20) zur Position der freien Enden (12) korrespondierend angeordnete erste Durchgänge (24) für miteinander zu verschweißende Anordnungen (26) von freien Enden (12) aufweist und die zweite Positioniereinheit (22) ebenfalls zur Position der freien Enden (12) korrespondierend angeordnete zweite Durchgänge (28) für miteinander zu verschweißende Anordnungen (26) von freien Enden (12) aufweist und wobei die freien Enden in den ersten Durchgängen (24) und den zweiten Durchgängen (28) angeordnet werden, und anschließend die die erste Positioniereinheit (20) und die zweite Positioniereinheit (22) in einem Ausrichtvorgang der Steckspulen (14) relativ zueinander, insbesondere in gegenläufiger Richtung, zueinander rotiert werden, so dass die erste Positioniereinheit (20) und die zweite Positioniereinheit (22) die Steckspulen (14) an gegenüberliegenden Seiten in einer zur Längsrichtung (L) orthogonalen Kontaktebene (42) kontaktieren, so dass die erste Positioniereinheit (20) und die zweite Positioniereinheit (22) die freien Enden (12) auf gleicher Höhe entlang der Längsrichtung (L) kontaktieren, wobei die ersten Durchgänge (24) und/oder die zweiten Durchgänge (28) radiale Anschlagsabschnitte (44) für miteinander zu verschweißende Anordnungen (26) von freien Enden (12) aufweisen und die in übereinanderliegend angeordneten ersten Durchgängen (24) und zweiten Durchgängen (28) befindlichen zu verschweißenden Anordnungen (26) von freien Enden (12) mittels mehrerer Radialspanneinheiten (48) einer Radialspanneinrichtung (46) gegen die radialen Anschlagsabschnitte (44) der ersten Durchgänge (24) und/oder der zweiten Durchgänge (28) gedrängt werden.

12. Verfahren nach Anspruch 11, **dadurch gekennzeichnet, dass** freie Enden (12) miteinander zu verschweißender Anordnungen (26) mittels eines Strahlschweißschritts miteinander verschweißt werden, während die freien Enden (12) sich in den Durchgängen (24, 28) der Positioniereinheit (20) und der zweiten Positioniereinheit (22) befinden.

## Claims

1. Device (10) for aligning and masking free ends (12) of plug-in coils (14) of a stator (16) to be welded, the alignment and masking serving to prepare a connection process, in particular a welding process, by means of which free ends (12) of the plug-in coils (14) are connected to one another, the free ends (12) extending along a longitudinal direction (L), and the free ends (12) being arranged on concentric circular paths (30) which extend in a circumferential direction (U), and in rows (32) which extend in the radial direction (R), the device (10) comprising a first planar positioning unit (20) and a second planar positioning unit (22), the first positioning unit (20) having first passages (24) for assemblies (26) of free ends (12) to be welded together, which passages are arranged so as to correspond to the position of the free ends (12), and the second positioning unit (22) also having second passages (28) for assemblies (26) of free ends (12) to be welded together, which passages are arranged so as to correspond to the position of the free ends (12), the first positioning unit (20) and/or the second positioning unit (22) being arranged rotatably in the device (10) such that the positioning units (20, 22) can be rotated relative to one another, in particular in opposite directions, during an alignment process of the plug-in coils (14), so that the first positioning unit (20) contacts the plug-in coils (14) in the circumferential direction (U) with a first contact portion (34) from a first side (36) and pushes them into the desired position and the second positioning unit (22) contacts the plug-in coils (14) in the circumferential direction (U) with a second contact portion (38) from a second side (40) and pushes them into the desired position, the second side (40) being opposite the first side (36), the first contact portion (34) and the second contact portion (38) lying in a contact plane (42) orthogonal to the longitudinal direction (L) so that during an alignment process they contact the free ends (12) at the same height along the longitudinal direction (L), the first passages (24) and/or the second passages (28) forming radial stop portions (44) for assemblies (26) of free ends (12) to be welded together, **characterized in that** the device further comprises a radial clamping device (46) having a plurality of radial clamping units (48), each of which is designed and arranged to push the assemblies (26) of free ends (12) to be welded, located in superimposed first passages (24) and second passages (28), against the radial stop portions (44) of the first passages (24) and/or the second passages (28).

2. Device according to claim 1, **characterized in that** the first positioning unit (20) and the second positioning unit (22) abut one another in the longitudinal direction, in particular have interlocking portions, in particular one of the positioning units (20, 22) has a portion which is displaceably arranged, in particular guided, in a recess of the other positioning unit (20, 22).

3. Device according to claim 1, **characterized in that** the first positioning unit (20) is arranged radially inwardly from the second positioning unit (22) and the positioning units (20, 22) extend into one another in the radial direction in the region of the passages (24, 28).

4. Device according to any of the preceding claims, **characterized in that** the radial clamping units (48) can be moved together in the radial direction (R) via a common drive, in particular a link drive.

5. Device according to any of the preceding claims, **characterized in that** the radial clamping units (48) are spring-mounted in order to limit a maximum contact force in the radial direction (R) during their actuation on the force of the spring mount (49), in particular the radial clamping units (48) each comprising a plurality of clamping elements (66), each of the clamping elements (66) being individually spring-mounted, in particular a spring-mounted clamping element (66) being provided for each assembly (26) to be welded or for each passage (24).

6. Device according to any of the preceding claims, **characterized in that** the first passages (24) and/or the second passages (28) have insertion phases (52) on an insertion side (50).

7. Device according to any of the preceding claims, **characterized in that** the first positioning unit (20) and/or the second positioning unit (22) and/or a link drive element (54) which is used to actuate the radial clamping units (48) can be brought into rotation in the circumferential direction (U) via a particular drive, in particular a linear drive (57), or it being possible for the first positioning unit (20) and the second positioning unit (22) to be moved in opposite directions via a common drive.

8. Device according to any of the preceding claims, **characterized in that** the device (10) comprises a cover unit (58) on a welding side (56), which cover comprises openings for the free ends (12).

9. Device according to any of the preceding claims, **characterized in that** the radial clamping units (48) are arranged on the welding side (56) of the positioning units (20, 22).

10. Device according to any of the preceding claims, **characterized in that** the positioning units (20, 22) have boundaries (64) of the passages (24, 28), their end portions (62) being rounded such that that in the open state of the positioning units (20, 22) the clear width of the passages (24, 28) in the radial direction is greater than in the closed state.

11. Method for aligning and masking free ends (12) of plug-in coils (14) of a stator (16) to be welded, wherein the alignment and masking serve to prepare a welding process, by means of which the free ends (12) of the plug-in coils (14) are connected to one another, wherein the free ends (12) extend along a longitudinal direction (L), and wherein the free ends (12) are arranged on concentric circular paths (30) which extend in a circumferential direction (U), and in rows (32) which extend in the radial direction (R), wherein a first planar positioning unit (20) and a second planar positioning unit (22) are used, wherein the first positioning unit (20) has first passages (24) for assemblies (26) of free ends (12) to be welded together, which passages are arranged so as to correspond to the position of the free ends (12), and the second positioning unit (22) also has second passages (28) for assemblies (26) of free ends (12) to be welded together, which passages are arranged so as to correspond to the position of the free ends (12), and wherein the free ends are arranged in the first passages (24) and the second passages (28), and subsequently the first positioning unit (20) and the second positioning unit (22) are rotated relative to one another, in particular in opposite directions, during an alignment process of the plug-in coils (14), so that the first positioning unit (20) and the second positioning unit (22) contact the plug-in coils (14) at opposite sides in a contact plane (42) orthogonal to the longitudinal direction (L), so that the first positioning unit (20) and the second positioning unit (22) contact the free ends (12) at the same height along the longitudinal direction (L), wherein the first passages (24) and/or the second passages (28) have radial stop portions (44) for assemblies (26) of free ends (12) to be welded together and the assemblies (26) of free ends (12) to be welded, located in superimposed first passages (24) and second passages (28), are pushed by means of a plurality of radial clamping units (48) of a radial clamping device (46) against the radial stop portions (44) of the first passages (24) and/or the second passages (28).

12. Method according to claim 11, **characterized in that** free ends (12) of assemblies (26) to be welded together are welded together by means of a beam welding step, while the free ends (12) are located in the passages (24, 28) of the positioning unit (20) and the second positioning unit (22).

## Revendications

1. Dispositif (10) permettant d'aligner et de masquer des extrémités libres (12) à souder de bobines embrochables (14) d'un stator (16), dans lequel l'alignement et le masquage servent à préparer un processus de liaison, en particulier un processus de soudage, au moyen duquel des extrémités libres (12) des bobines embrochables (14) sont reliées entre elles, dans lequel les extrémités libres (12) s'étendent le long d'une direction longitudinale (L), et dans lequel les extrémités libres (12) sont disposées sur des trajectoires circulaires concentriques (30) qui sont étendues dans une direction circonférentielle (U) et en rangées (32) qui sont étendues dans une direction radiale (R), dans lequel le dispositif (10) comprend une première unité de positionnement (20) plane et une seconde unité de positionnement (22) plane, dans lequel la première unité de positionnement (20) présente des premiers passages (24) disposés de manière à correspondre à la position des extrémités libres (12) pour des ensembles (26) d'extrémités libres (12) à souder entre eux et la seconde unité de positionnement (22) présente des seconds passages (28) également disposés de manière à correspondre à la position des extrémités libres (12) pour des ensembles (26) d'extrémités libres (12) à souder entre eux, dans lequel la première unité de positionnement (20) et/ou la seconde unité de positionnement (22) sont disposées de manière à pouvoir tourner dans le dispositif (10), de sorte que les unités de positionnement (20, 22) peuvent tourner l'une par rapport à l'autre, en particulier dans des directions opposées l'une à l'autre, lors d'un processus d'alignement des bobines embrochables (14), de sorte que la première unité de positionnement (20) entre en contact avec les bobines embrochables (14) dans la direction circonférentielle (U) avec une première section de contact (34) à partir d'une première face (36) et les pousse dans la position souhaitée, et la seconde unité de positionnement (22) entre en contact avec les bobines embrochables (14) dans la direction circonférentielle (U) avec une seconde section de contact (38) à partir d'une seconde face (40) et les pousse dans la position souhaitée, dans lequel la seconde face (40) est opposée à la première face (36), dans lequel la première section de contact (34) et la seconde section de contact (38) sont situées dans un plan de contact (42) orthogonal à la direction longitudinale (L), de sorte que, lors d'un processus d'alignement, elles entrent en contact avec les extrémités libres (12) à la même hauteur le long de la direction longitudinale (L), dans lequel les premiers passages (24) et/ou les seconds passages (28) sont des sections de butée radiales (44) pour des ensembles (26) d'extrémités libres (12) à souder entre eux, **caractérisé en ce que** le dispositif comprend en outre un appareil de serrage radial (46) comportant plusieurs unités de serrage radial (48), lesquelles sont respectivement conçues et disposées pour pousser les ensembles (26) d'extrémités libres (12) à souder, se trouvant dans des premiers passages (24) et des seconds passages (28) superposés, contre les sections de butée radiales (44) des premiers passages (24) et/ou des seconds passages (28).

2. Dispositif selon la revendication 1, **caractérisé en ce que** la première unité de positionnement (20) et la seconde unité de positionnement (22) sont en appui l'une contre l'autre dans la direction longitudinale, en particulier présentent des sections venant en prise l'une dans l'autre, en particulier l'une des unités de positionnement (20, 22) présente une section qui est disposée de manière à coulisser, en particulier de manière à être guidée, dans un évidement de l'autre unité de positionnement (20, 22).

3. Dispositif selon la revendication 1, **caractérisé en ce que** la première unité de positionnement (20) est disposée radialement à l'intérieur de la seconde unité de positionnement (22) et les unités de positionnement (20, 22) s'étendent l'une dans l'autre dans la direction radiale dans la zone des passages (24, 28).

4. Dispositif selon l'une des revendications précédentes, **caractérisé en ce que** les unités de serrage radial (48) peuvent être déplacées ensemble dans la direction radiale (R) par l'intermédiaire d'un entraînement commun, en particulier d'un entraînement à coulisse.

5. Dispositif selon l'une des revendications précédentes, **caractérisé en ce que** les unités de serrage radial (48) sont montées de manière élastique pour limiter une force de pression maximale dans la direction radiale (R) à la force du palier élastique (49) lors de leur actionnement, en particulier dans lequel les unités de serrage radial (48) comprennent respectivement plusieurs éléments de serrage (66), dans lequel chacun des éléments de serrage (66) est monté individuellement de manière élastique, en particulier dans lequel un élément de serrage (66) monté de manière élastique est prévu pour chaque agencement (26) à souder ou pour chaque passage (24).

6. Dispositif selon l'une des revendications précédentes, **caractérisé en ce que** les premiers passages (24) et/ou les seconds passages (28) présentent des phases d'introduction (52) sur une face d'introduction (50).

7. Dispositif selon l'une des revendications précédentes, **caractérisé en ce que** la première unité de positionnement (20) et/ou la seconde unité de positionnement (22) et/ou un élément d'entraînement à coulisse (54), lequel sert à l'actionnement des unités de serrage radial (48), peuvent être amenés en rotation dans la direction circonférentielle (U) par l'intermédiaire d'un entraînement respectif, en particulier d'un entraînement linéaire (57), ou dans lequel la première unité de positionnement (20) et la seconde unité de positionnement (22) peuvent être déplacées dans des directions opposées par l'intermédiaire d'un entraînement commun.

8. Dispositif selon l'une des revendications précédentes, **caractérisé en ce que** le dispositif (10) comprend, sur une face de soudage (56), une unité de recouvrement (58), comportant des ouvertures pour les extrémités libres (12).

9. Dispositif selon l'une des revendications précédentes, **caractérisé en ce que** les unités de serrage radial (48) sont disposées sur des côtés de la face de soudage (56) des unités de positionnement (20, 22).

10. Dispositif selon l'une des revendications précédentes, **caractérisé en ce que** les unités de positionnement (20, 22) présentent des délimitations (64) des passages (24, 28), dans lequel leurs sections d'extrémité (62) sont arrondies, de sorte que, dans l'état ouvert des unités de positionnement (20, 22), la largeur libre des passages (24, 28) dans la direction radiale est supérieure à celle dans l'état fermé.

11. Procédé permettant d'aligner et de masquer des extrémités libres (12) à souder de bobines embrochables (14) d'un stator (16), dans lequel l'alignement et le masquage servent à préparer un processus de soudage au moyen duquel les extrémités libres (12) des bobines embrochables (14) sont reliées entre elles, dans lequel les extrémités libres (12) s'étendent le long d'une direction longitudinale (L), et dans lequel les extrémités libres (12) sont disposées sur des trajectoires circulaires concentriques (30) qui sont étendues dans une direction circonférentielle (U) et en rangées (32) qui sont étendues dans une direction radiale (R), dans lequel une première unité de positionnement (20) plane et une seconde unité de positionnement (22) plane sont utilisées, dans lequel la première unité de positionnement (20) présente des premiers passages (24) disposés de manière à correspondre à la position des extrémités libres (12) pour des ensembles (26) d'extrémités libres (12) à souder entre eux et la seconde unité de positionnement (22) présente des seconds passages (28) également disposés de manière à correspondre à la position des extrémités libres (12) pour des ensembles (26) d'extrémités libres (12) à souder entre eux et dans lequel les extrémités libres sont disposées dans les premiers passages (24) et dans les seconds passages (28), et ensuite, la première unité de positionnement (20) et la seconde unité de positionnement (22) tournent l'une par rapport à l'autre, en particulier dans des directions opposées, dans un processus d'alignement des bobines embrochables (14), de sorte que la première unité de positionnement (20) et la seconde unité de positionnement (22) entrent en contact avec les bobines embrochables (14) sur des faces opposées dans un plan de contact (42) orthogonal à la direction longitudinale (L), de sorte que la première unité de positionnement (20) et la seconde unité de positionnement (22) entrent en contact avec les extrémités libres (12) à la même hauteur le long de la direction longitudinale (L), dans lequel les premiers passages (24) et/ou les seconds passages (28) présentent des sections de butée radiales (44) pour des ensembles (26) d'extrémités libres (12) à souder entre eux et les ensembles (26) d'extrémités libres (12) à souder se trouvant dans des premiers passages (24) et des seconds passages (28) superposés sont poussés contre les sections de butée radiales (44) des premiers passages (24) et/ou des seconds passages (28) au moyen de plusieurs unités de serrage radial (48) d'un appareil de serrage radial (46).

12. Procédé selon la revendication 11, **caractérisé en ce que** des extrémités libres (12) d'ensembles (26) à souder entre eux sont soudées entre elles au moyen d'une étape de soudage par faisceau, tandis que les extrémités libres (12) se trouvent dans les passages (24, 28) de l'unité de positionnement (20) et de la seconde unité de positionnement (22).
